Europäisches Patentamt

European Patent Office

Office européen des brevets

(11) Publication number: **0 136 121**
**B1**

# EUROPEAN PATENT SPECIFICATION

(45) Date of publication of patent specification: **28.06.89**

(51) Int. Cl.⁴: **H 02 K 5/15**

(21) Application number: **84306090.6**

(22) Date of filing: **06.09.84**

(54) Flat miniaturized electric motor.

(30) Priority: **16.09.83 JP 142281/83 u**

(43) Date of publication of application:
**03.04.85 Bulletin 85/14**

(45) Publication of the grant of the patent:
**28.06.89 Bulletin 89/26**

(84) Designated Contracting States:
**DE FR GB IT**

(56) References cited:

PATENT ABSTRACTS OF JAPAN, vol. 4, no. 56
(E-8)538r, 25th April 1980; & JP - 55 26038
PATENT ABSTRACTS OF JAPAN, vol. 3, no. 41
(E-103), 10th April 1979; & JP - 54- 20 308

(73) Proprietor: **JAPAN SERVO CO. LTD.**
**No. 7, Kandamitoshiro-Cho**
**Chiyoda-Ku Tokyo (JP)**

(72) Inventor: **Sakamoto, Masafumi**
**No. 358-10, Aioi-Cho 5-Chome**
**Kiryu-Shi Gunma (JP)**
Inventor: **Azegami, Masahiko**
**No. 1211-9, Hishimachi Kurokawa**
**Kiryu-Shi Gunma (JP)**

(74) Representative: **Hustwitt, Philip Edward et al**
**Hustwitt & Co. St. George's House 44 Hatton**
**Garden**
**London, EC1N 8ER (GB)**

Courier Press, Leamington Spa, England.

## Description

This invention relates to a flat, miniaturized electric motor according to the precharacterising part of Claim 1.

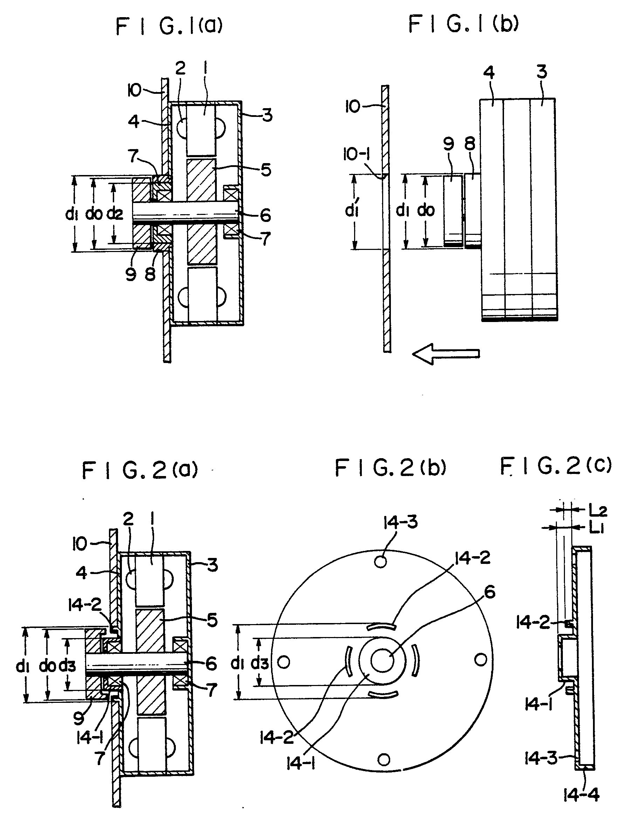

Fig. 1(a) is a sectional view through the structure of a conventional flat, miniaturized electric motor. This flat, miniaturized electric motor consists of a stator 1 which has a plurality of windings 2 thereon and is held between two bowl-shaped end brackets 3, 4, and a rotor 5 supported rotatably on a shaft 6 by bearings 7 which are provided in the end brackets 3, 4 in such a manner that the rotor 5 faces the inner circumferential surface of the stator 1 with a gap therebetween. When an electric current is applied to the stator windings 2 in a suitable manner, the rotor 5 rotates. Reference numeral 8 denotes a bearing housing provided on the front end bracket 4 so that it acts as a mounting and centering guide, and 9 denotes an output pulley mounted on the rotor shaft 6.

Fig. 1(b) illustrates an example of a method of mounting this electric motor on a machine.

A mounting hole 10-1 of diameter $d_1'$ slightly larger than the outer diameter $d_1$ of the bearing housing 8, which will act as a mounting and centering guide for the electric motor, is provided in part of a base plate 10 of an apparatus on which the electric motor is to be mounted. The outer diameter $d_0$ of the pulley 9 is set to be slightly smaller than that $d_1$ of the bearing housing. In order to mount the electric motor to which the pulley 9 is attached onto the base plate 10 in the direction of the arrow, the pulley 9 is inserted through the hole 10-1 in the base plate 10, the bearing housing 8 is then fitted into the same hole 10-1, and the electric motor is attached to the base plate 10 with screws (not shown).

During this mounting, if the difference between the outer diameter $d_1$ of the bearing housing 8 and the diameter $d_1'$ of the hole 10-1 in the base plate 10 is minimized, mounting and centering errors can be reduced to a low level. Therefore, the outer diameter $d_1$ of the bearing housing 8 provided on the end bracket 4 is very significant, so that with a conventional flat, miniaturized electric motor, the bearing housing 8 and the end bracket 4 are manufactured as separate parts, and are then attached unitarily, as shown in Fig. 1(a).

However, in the flat, miniaturized electric motor of this conventional construction, the inner and outer surfaces of the bearing housing must be processed to correct any alignment errors which might occur when the bearing housing is attached to the end bracket, after the end bracket 4 and bearing housing 8 have been manufactured independently and attached unitarily. This results in an increase in the cost of manufacturing of the electric motor.

An object of this invention is to provide a flat, miniaturized electric motor in which these problems encountered in a conventional electric motor of this kind can be eliminated, and which can be manufactured at a low cost.

The present invention is thus concerned with the problem of accurately mounting a flat, miniaturised electric motor such that its output shaft is accurately centred relative to the hole in the base plate through which the output shaft passes. Prior art Japanese Specification A 55-26038 discloses the manufacture of a bearing-mounted motor and means for attaching this motor to another member through planar projections but is not concerned with the problem of centring the output shaft of the motor.

According to the present invention there is provided a flat, miniaturized electric motor comprising a stator held between two shallow bowl-shaped end brackets, a rotor mounted on an output shaft rotatably supported by bearings on said end brackets in such a manner that said rotor faces said stator with a gap therebetween, one end bracket being mounted on a base plate with the output shaft extending through a mounting hole in the said base plate, characterised in that one end bracket is pressed from a piece of sheet metal so that the end bracket includes a first short cylindrical member which houses therein that one of the said bearings which supports said shaft on the end bracket and which extends outwardly through the hole in the base plate, and in that a second short, cylindrical member of a diameter greater than the outer diameter of said first short, cylindrical member is provided concentrically with and on the outer side of said first short, cylindrical member, said second short, cylindrical member consisting of a plurality of arcuate, circumferentially-spaced projections engaging the base plate and mounting the end bracket to the base plate with the output shaft centred in the hole.

The present invention will be further understood from the following description of an embodiment thereof taken in conjunction with the accompanying drawings, in which:

Fig. 1(a) is a sectional view through a conventional flat, miniaturized electric motor;

Fig. 1(b) illustrates a method of mounting the electric motor on a machine;

Fig. 2(a) is a sectional view through an embodiment of the device of this invention; and

Figs. 2(b) and 2(c) are a front elevation and a sectioned side elevation of an end bracket thereof.

As shown in Figs. 2(a) - 2(c) the conventional bearing housing 8 is not used in the device of this invention; this device is provided with a short, cylindrical member 14-1 housing therein a bearing 7 arranged substantially at the center of an end bracket 4 on the output shaft side, and another short, cylindrical member 14-2 arranged concentrically with and on the outer side of the first short, cylindrical member 14-1, and which constitutes a mounting and centring guide, both cylindrical members 14-1, 14-2 projecting outward from the end bracket 4.

The end bracket 4 of this invention is extrusion-formed by pressing a piece of circular sheet metal in such a manner that the final product has a circular portion; a shallow bowl-shaped rim 14-4 which stands upright from the outer circumference of the circular portion, and which is used to hold the stator; the bearing-housing short, cylindrical member 14-1 standing upright from the central portion of the circular portion, so as to extend in the direction opposite to that in which the rim 14-4 extends; and another short, cylindrical member 14-2 which stands upright in the same direction as the first short, cylindrical member 14-1 from a section of the circular portion which is on the outer side thereof, and which constitutes a centring guide used when the electric motor is mounted on a machine. The short, cylindrical member 14-2 constituting the centring guide is so formed that it does not have a continuous, annular cross-section, in order to maintain a satisfactory strength thereof; it is formed in the shape of a partially-cutaway cylinder, i.e., it consists of a plurality of circumferentially-spaced, cross-sectionally arcuate, upright members.

$L_1$, $L_2$ are the lengths, measured from the mounting surface of the end bracket 4, of the upright short, cylindrical members 14-1, 14-2, respectively. When $L_1$ is greater than $L_2$, the end surface of the pulley 9 mounted on the output shaft facing the short, cylindrical member 14-1 extending from the end bracket 4 can be provided with recess as shown in Fig. 2(a). This means that the pulley 9 can be positioned closer to the mounting surface of the electric motor, and thus the volume of the space occupied by the electric motor in a machine can be reduced, and the machine can be miniaturized.

When at least one of the end brackets 3, 4 is made of a magnetic material, such as iron or the like, any leaking magnetic flux from the stator or rotor flowing in the direction of the output shaft can be absorbed by the end bracket and recirculated to the electric motor. Thus, the quantity of axially-leaking magnetic flux can be reduced.

## Claims

1. A flat, miniaturized electric motor comprising a stator (1) held between two shallow bowl-shaped end brackets (3, 4), a rotor (5) mounted on an output shaft (6) rotatably supported by bearings (7, 7) on said end brackets (3, 4) in such a manner that said rotor (5) faces said stator (1) with a gap therebetween, one end bracket (4) being mounted on a base plate (10) with the output shaft (6) extending through a mounting hole (10-1) in the said base plate (10), characterised in that one end bracket (4) is pressed from a piece of sheet metal so that the end bracket (4) includes a first short cylindrical member (14-1) which houses therein that one of the said bearings (7) which supports said shaft (6) on the end bracket (4) and which extends outwardly through the hole (10-1) in the base plate (10), and in that a second short, cylindrical member (14-2) of a diameter greater than the outer diameter of said first short, cylindrical member (14-1) is provided concentrically with and on the outer side of said first short, cylindrical member (14-1), said second short, cylindrical member (14-2) consisting of a plurality of arcuate, circumferentially-spaced projections engaging the base plate (10) and mounting the end bracket (4) to the base plate (10) with the output shaft (6) centred in the hole (10-1).

2. A flat, miniaturized electric motor according to Claim 1 characterised in that the first short cylindrical member (14-1) extends further from the main surface of the end bracket (4) than the second short cylindrical member (14-2), and in that an output pulley (9) mounted on the output shaft (6) and facing the first short cylindrical member (14-1) has a recess of a diameter greater than the outer diameter of said first short cylindrical member (14-1) enabling the output pulley (9) to be positioned close to the base plate (10).

3. A flat, miniaturised electric motor according to Claim 1 or Claim 2, wherein one of said end brackets (3, 4) is made of a magnetic material such as iron.

## Patentansprüche

1. Flacher elektrischer Kleinstmotor, enthaltend einen Stator (1), der zwischen zwei flachen schalenförmigen Endträgern (3, 4) gehalten ist, einen Rotor (5), der auf einer Ausgangswelle (6) befestigt ist, die drehbar von Lagern (7, 7) an den Endträgern (3, 4) derart gelagert ist, daß der Rotor (5) dem Stator (1) mit Spalt dazwischen gegenübersteht, wobei ein Endträger (4) an einer Grundplatte (10) befestigt ist und die Ausgangswelle (6) sich durch ein Montageloch (10-1) in der Grundplatte (10) erstreckt, dadurch gekennzeichnet, daß ein Endträger (4) aus einem Metallblechstück derart gepreßt ist, daß der Endträger (4) ein erstes kurzes zylindrisches Element (14-1) enthält, das darin jenes eine der genannten Lager (7) aufnimmt, das die Welle (6) an dem Endträger (4) lagert und das sich nach außen durch das Loch (10-1) in der Grundplatte (10) erstreckt, und daß ein zweites kurzes zylindrisches Element (14-2) eines Durchmessers, der größer als der Außendurchmesser des ersten kurzen zylindrischen Elements (14-1) ist, konzentrisch zu und auf der Außenseite des ersten kurzen zylindrischen Elements (14-1) angeordnet ist, welches zweite kurze zylindrische Element (14-2) aus mehreren bogenförmigen, in Umfangsrichtung verteilt angeordneten Vorsprüngen besteht, die an der Grundplatte (10) anliegen und den Endträger (4) an der Grundplatte (10) halten, wobei die Ausgangswelle (6) in dem Loch (10-1) zentriert ist.

2. Flacher elektrischer Kleinstmotor nach Anspruch 1, dadurch gekennzeichnet, daß das erste kurze zylindrische Element (14-1) sich weiter von der Hauptfläche des Endträgers (4) erstreckt, als das zweite kurze zylindrische Element (14-2), und daß ein Ausgangsrad (9), das auf der Ausgangswelle (6) befestigt ist und dem ersten kurzen zylindrischen Element (14-1) gegenübersteht, eine Ausnehmung eines Durchmessers aufweist, der größer als der Außendurchmesser des ersten kurzen zylindrischen Elements (14-1) ist, was erlaubt, das Ausgangsrad (9) nahe an der Grundplatte (10) anzuordnen.

3. Flacher elektrischer Kleinstmotor nach Anspruch 1 oder 2, bei dem einer der genannten Endträger (3, 4) aus einem magnetischen Material, beispielsweise Eisen, besteht.

## Revendications

1. Moteur électrique miniaturisé plat, comprenant un stator (1) maintenu entre deux pattes d'extrémité en forme de cuvette peu profondes (3, 4), un rotor (5) monté sur un arbre de sortie (6) supporté en rotation par des paliers (7, 7) sur lesdites pattes d'extrémité (3, 4), d'une façon telle que ledit rotor (5) fait face audit stator (1) avec un espacement entre eux, une patte d'extrémité (4) étant montée sur une plaque de base (10) et l'arbre de sortie (6) s'étendant à travers un alésage de montage (10-1) dans ladite plaque de base (10),

caractérisé en ce qu'une patte d'extrémité (4) est pressée à partir d'une pièce de métal en feuille, de sorte que la patte d'extrémité (4) comprend un premier organe cylindrique court (14-1) dans lequel est logé celui desdits paliers (7) qui supporte ledit arbre (6) sur la patte d'extrémité (4) et qui s'étend vers l'extérieur à travers l'alésage (10-1) dans la plaque de base (10), et en ce qu'un second organe cylindrique court (14-2) de diamètre plus grand que le diamètre externe dudit premier organe cylindrique court (14-1) est prévu concentriquement audit premier organe cylindrique court (14-1) et sur le côté externe de celui-ci, ledit second organe cylindrique court (14-2) étant constitué d'une pluralité de saillies espacées circonférentiellement, arquées, engageant la plaque de base (10) et permettant le montage de la patte d'extrémité (4) à la plaque de base (10) avec l'arbre de sortie (6) centré dans l'alésage (10-1).

2. Moteur électrique miniaturisé plat selon la revendication 1, caractérisé en ce que le premier organe cylindrique court (14-1) s'étend plus à partir de la surface principale de la patte d'extrémité (4) que le second organe cylindrique court (14-2), et en ce qu'une poulie de sortie (9) montée sur l'arbre de sortie (6) et faisant face au premier organe cylindrique court (14-1) présente un évidement d'un diamètre plus grand que le diamètre externe dudit premier organe cylindrique court (14-1) permettant à la poulie de sortie (9) d'être positionnée près de la plaque de base (10).

3. Moteur électrique miniaturisé plat selon la revendication 1 ou la revendication 2, dans lequel une desdites pattes d'extrémité (3, 4) est réalisée en une matière magnétique, telle que du fer.

F I G. 1 (a)

F I G. 1 (b)

F I G. 2 (a)

F I G. 2 (b)

F I G. 2 (c)